# EUROPÄISCHE PATENTANMELDUNG

(11) **EP 2 264 299 A2**
(43) Veröffentlichungstag der Anmeldung: **22.12.2010**
(21) Anmeldenummer: 10002984.2
(22) Anmeldetag: 22.03.2010
(51) Int. Cl.: F02D 13/02

(54) **Verfahren zum Betreiben einer Hubkolben-Brennkraftmaschine**

(30) Priorität: 15.06.2009 DE 102009024903
(71) Anmelder: Volkswagen AG, 38436 Wolfsburg (DE)
(72) Erfinder: Groenendijk, Axel, 38518 Gifhorn (DE)

(57) **Zusammenfassung**

Die Erfindung betrifft ein Verfahren zum Betreiben einer Hubkolben-Brennkraftmaschine, insbesondere Dieselbrennkraftmaschine mit variabler Ventilsteuerung (VVT), insbesondere eines Kraftfahrzeugs, mit wenigstens einem Arbeitszylinder, dem wenigstens ein Einlassventil zugeordnet ist und in dem ein Hubkolben oszillierend zwischen einem oberen Totpunkt (OT) und einem unteren Totpunkt (UT) bewegt wird, wobei der Hubkolben abwechselnd mit einem Ladungswechselhub, der einen Ausstoßtakt sowie einen Ansaugtakt umfasst, und einem Arbeitshub, der einen Verdichtungstakt und einen Arbeitstakt umfasst, eine Kurbelwelle antreibt, wobei in Abhängigkeit von einem Kurbelwinkel der, Kurbelwelle im Ladungswechselhub des Hubkolbens das wenigstens eine Einlassventil des wenigstens einen Arbeitszylinders geöffnet und geschlossen wird, wobei ein effektives Verdichtungsverhältnis in wenigstens einem Arbeitszylinder wahlweise dadurch unter das geometrische Verdichtungsverhältnis des Arbeitszylinders abgesenkt wird, dass nach einem UT am Ende des Ladungswechselhubes ein Schließzeitpunkt wenigstens eines Einlassventils soweit nach spät verschoben wird und/oder ein Öffnungszeitpunkt des Einlassventils soweit nach früh verschoben wird, dass ein Teil der zuvor im Ansaugtakt angesaugten Frischgasmenge durch dieses Einlassventil im Verdichtungstakt wieder ausgeschoben wird. Hierbei wird nach einem Kaltstart der Brennkraftmaschine die Verdichtungsabsenkung blockiert, bis wenigstens ein Betriebsparameter der Brennkraftmaschine einen vorbestimmten Wert erreicht oder überschreitet.

## Beschreibung

Die-Erfindung betrifft eine Verfahren zum Betreiben einer Hubkolben-Brennkraftmaschine, insbesondere Dieselbrennkraftmaschine mit variabler Ventilsteuerung (VVT), insbesondere eines Kraftfahrzeugs, mit wenigstens einem Arbeitszylinder, dem wenigstens ein Einlassventil zugeordnet ist und in dem ein Hubkolben oszillierend zwischen einem oberen Totpunkt (OT) und einem unteren Totpunkt (UT) bewegt wird, wobei der Hubkolben abwechselnd mit einem Ladungswechselhub, der einen Ausstoßtakt sowie einen Ansaugtakt umfasst, und einem Arbeitshub, der einen Verdichtungstakt und einen Arbeitstakt umfasst, eine Kurbelwelle antreibt, wobei in Abhängigkeit von einem Kurbelwinkel der Kurbelwelle im Ladungswechselhub des Hubkolbens das wenigstens eine Einlassventil des wenigstens einen Arbeitszylinders geöffnet und geschlossen wird, wobei eine Verdichtung in wenigstens einem Arbeitszylinder wahlweise dadurch abgesenkt wird, dass nach einem UT am Ende des Ladungswechselhubes ein Schließzeitpunkt wenigstens eines Einlassventils soweit nach spät verschoben wird, dass ein Teil der zuvor im Ansaugtakt angesaugten Frischgasmenge durch dieses Einlassventil im Verdichtungstakt wieder ausgeschoben wird, gemäß dem Oberbegriff des Patentanspruchs 1.

Beim bekannten Miller/Atkinson-Cycle wird der Zeitpunkt "Einlassventil schließt" (ES) nach spät verschoben. Auf diese Weise wird bereits im Zylinder befindliches Frischgas z.T. wieder ausgeschoben. Dies bedeutet einen Füllungsnachteil, der aber über eine Aufladung mit einem geeigneten Ladedruck kompensiert werden kann. Dabei wird beispielsweise der Ladedruck im Volumen zwischen Laderausgang und Motoreinlass so zu regeln, dass der Ladedruck in jedem Miller-Betriebspunkt, d.h. jeder Betriebspunkt in dem der "MillerCycle" zur Anwendung kommt, dem theoretischen Verdichtungsenddruck in den Arbeitszylindern der Brennkraftmaschine zum Zeitpunkt Einlassventil schließt entspricht. Für die Regelung, wahlweise auch Steuerung, kommen Druck- und/oder Temperatur- und/oder Massenstromsensoren oder sinnvolle Kombisensoren der drei angesprochenen Sensortypen zum Einsatz.

Der positive Effekt des Miller/Atkinson-Cycles mittels frühem oder spätem Zeitpunkt für das Schließen des Einlassventils auf die NOₓ-Emission und Homogenisierbarkeit des Dieselgemischs ist bekannt. Weiterhin kann bei ottomotorischen Anwendungen die Klopfneigung bei Hochaufladung deutlich reduziert werden. Im Gegensatz zum Ottomotor, der aufgrund fehlender geometrischer Zwänge mit positiver Ventilüberschneidung arbeiten kann, ist beim Dieselmotor eine einfache Umsetzung des Verfahrens mit Hilfe eines Phasenstellers generell nicht möglich. Grund hierfür ist eine mechanische Kollision des Ventils mit dem Kolben bei Frühverstellung und vermehrte Pumparbeit bei Spätverstellung.

Der Erfindung liegt die Aufgabe zugrunde, ein Verfahren der o.g. Art hinsichtlich der Emissionsminimierung zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass nach einem Kaltstart der Brennkraftmaschine die Verdichtungsabsenkung blockiert wird, bis wenigstens ein Betriebsparameter der Brennkraftmaschine einen vorbestimmten Wert erreicht oder überschreitet.

Dies hat den Vorteil, dass nach einem Kaltstart der Brennkraftmaschine ein übermäßiger Schadstoffausstoß vermieden ist.

In einer bevorzugten Ausführungsform umfasst der wenigstens eine Betriebsparameter eine Motortemperatur, eine Kühlwassertemperatur, eine Öltemperatur und/oder eine Temperatur einer Ansaugluft in einem Saugrohr der Brennkraftmaschine.

Eine besonders gute Absenkung des Schadstoffausstoßes erzielt man dadurch, dass der wenigstens eine Betriebsparameter eine Temperatur eines Katalysators in einem Abgasstrang der Brennkraftmaschine umfasst, wobei der vorbestimmte Wert für die Temperatur eines Katalysators eine Anspringtemperatur des Katalysators ist.

Eine weiter verbesserte Absenkung des Schadstoffausstoßes erzielt man dadurch, dass der wenigstens eine Betriebsparameter ein Zündverzug in dem Arbeitszylinder ist. Zweckmäßigerweise wird der Zündverzug oder weitere Verbrennungsmerkmale, wie Schwerpunktlage der Verbrennung, beispielsweise mittels einer Zylinderdrucksensorik detektiert.

Bei einem Wiederstart der Brennkraftmaschine in warmen Zustand, d.h. bei einem Warmstart, bei dem der vorbestimmte Wert des wenigstens einen Betriebsparameters bereits vor dem Start der Brennkraftmaschine erreicht oder überschritten ist, wird in Abhängigkeit von wenigstens einem der Betriebsparameter der Brennkraftmaschine ein Wunschverdichtungsverhältnis vorbestimmt und beim Warmstart mittels wenigstens einem Einlassventil eingestellt.

Die Erfindung wird im Folgenden anhand der Zeichnung näher erläutert. Diese zeigt in
- Fig. 1: eine beispielhafte Ausführungsform einer Brennkraftmaschine in schematischer Ansicht,
- Fig. 2: eine schematische Darstellung der Nockenwellenanordnung bei der Brennkraftmaschine gemäß Fig. 1,
- Fig. 3: eine graphische Darstellung der Ventilbewegung von Einlass- und Auslassventilen der verschiedenen Nockenwellen und der Kolbenbewegung bei einem Verstellwinkel von 0°KW,
- Fig. 4: eine graphische Darstellung der Ventilbewegung von Einlass- und Auslassventilen der verschiedenen Nockenwellen und der Kolbenbewegung bei maximaler Verstellung in Richtung Früh,
- Fig. 5: eine graphische Darstellung der Ventilbewegung von Einlass- und Auslassventilen der verschiedenen Nockenwellen und der Kolbenbewegung bei maximaler Verstellung in Richtung Spät und
- Fig. 6: eine graphische Darstellung der effektiven Verdichtung in Abhängigkeit von einer Verstellung eines Zeitpunktes für "Einlassventil schließt" nach Spät.

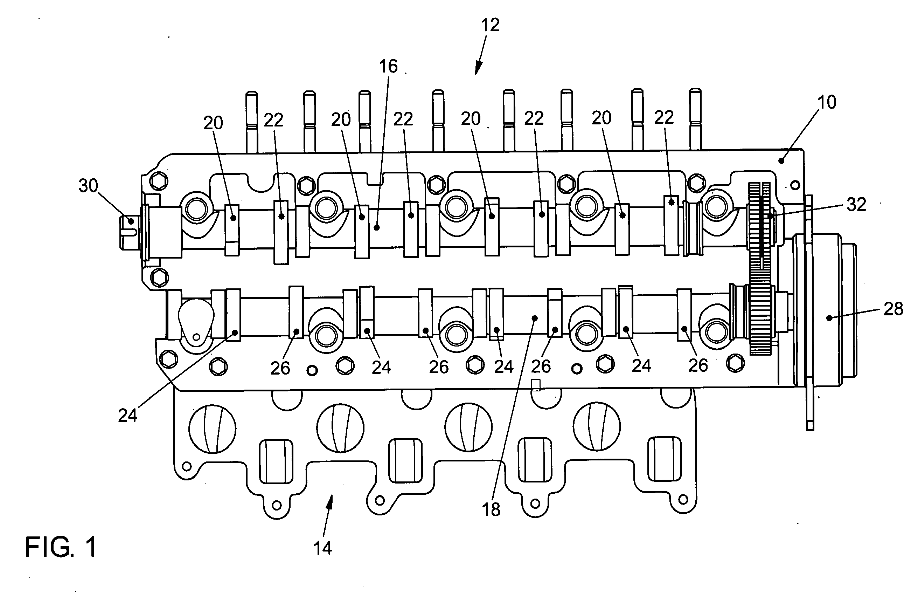

Die in Fig. 1 dargestellte, beispielhafte Ausführungsform einer Brennkraftmaschine zum Ausführen des erfindungsgemäßen Verfahrens umfasst einen Zylinderkopf 10, in dem nicht näher dargestellte Arbeitszylinder angeordnet sind, in denen sich jeweils ein Hubkolben (nicht dargestellt) oszillierend zwischen einem oberen Totpunkt (OT) und einem unteren Totpunkt (UT) bewegt. Der Zylinderkopf 10 umfasst eine Auslassseite 12, an der Abgase aus den Arbeitszylindern abgeführt werden, und eine Einlassseite 14, an der den Arbeitszylindern Frischgas zugeführt wird.

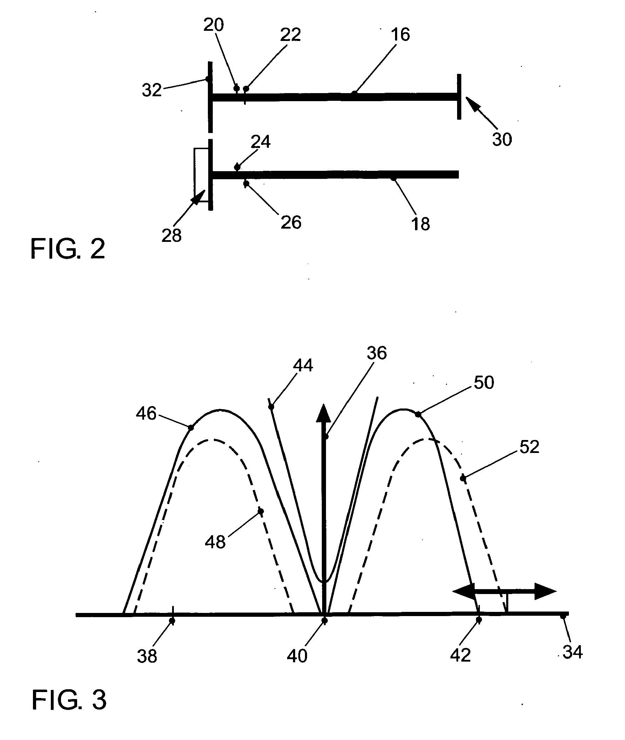

Jedem Arbeitszylinder sind zwei Einlassventile (nicht dargestellt) und zwei Auslassventile (nicht dargestellt) zugeordnet, wobei eine erste Nockenwelle 16 und eine zweite Nockenwelle 18 vorgesehen sind. Die erste Nockwelle 16 trägt Einlassnocken 20, die jeweils ein Einlassventil betätigen, und Auslassnocken 22, die jeweils ein Auslassventil betätigen. Ebenso trägt die zweite Nockenwelle 18 Einlassnocken 24, die jeweils ein Einlassventil betätigen, und Auslassnocken 26, die jeweils ein Auslassventil betätigen. Auf beiden Nockenwellen 16, 18 wechseln sich in Längsrichtung gesehen jeweils Einlassnocken 20, 24 und Auslassnocken 22, 26 ab. Auf diese Weise werden die beiden Einlassventile und Auslassventile eines jeden Arbeitszylinders von verschiedenen Nockenwellen 16, 18 betätigt. Wie insbesondere zusätzlich aus Fig. 2 hervorgeht, ist somit jede der Nockenwellen 12, 14 eine so genannte gemischte Nockenwellen, d.h. jede Nockenwelle 12, 14 betätigt sowohl Einlass- als auch Auslassventile über entsprechende Einlassnocken 20, 24 bzw. Auslassnocken 22, 26.

Die Steuerzeiten der ersten Nockenwelle 16 für die dieser zugeordneten Einlass- und Auslassventile sind unveränderbar festgelegt. An der zweiten Nockenwelle 18 ist ein Versteller 28 angeordnet, welcher die Steuerzeiten der dieser zugeordneten Einlass- und Auslassventile gegenüber den Steuerzeiten der ersten Nockenwelle 16 verändert, indem die zweite Nockenwelle 18 durch den Versteller 28 relativ zur ersten Nockenwelle 16 verdreht wird (variable Ventilsteuerzeiten - VVT). Die erste Nockenwelle 16 ist diejenige Nockenwelle, die bei 30 von einer nicht dargestellten Kurbelwelle der Brennkraftmaschine angetrieben wird. Die erste Nockenwelle 16 treibt dann ihrerseits über Zahnräder 32 die zweite Nockenwelle 18 an.

In den Fig. 3 bis 5 ist auf einer horizontalen Achse 34 ein Kurbelwinkel und auf einer vertikalen Achse 36 eine Hubbewegung aufgetragen. Auf der horizontalen Achse 34 ist bei 38 ein unterer Totpunkt (UT) des Hubkolbens vor dem Ladungswechsel, bei 40 ein oberer Totpunkt (OT) des Hubkolbens während des Ladungswechsels und bei 42 ein unterer Totpunkt (UT) des Hubkolbens nach dem Ladungswechsel aufgetragen. Ein erster Graph 44 veranschaulicht die Hubbewegung 36 über den Kurbelwinkel 34 für den Kolben, ein zweiter Graph 46 veranschaulicht die Hubbewegung 36 über den Kurbelwinkel 34 für diejenigen Auslassventile, die von den Auslassnocken 22 der ersten Nockenwelle 16 gesteuert werden, ein dritter Graph 48 (gestrichelt) veranschaulicht die Hubbewegung 36 über den Kurbelwinkel 34 für diejenigen Auslassventile, die von den Auslassnocken 26 der zweiten Nockenwelle 18 gesteuert werden, ein vierter Graph 50 veranschaulicht die Hubbewegung 36 über den Kurbelwinkel 34 für diejenigen Einlassventile, die von den Einlassnocken 20 der ersten Nockenwelle 16 gesteuert werden und ein fünfter Graph 52 (gestrichelt) veranschaulicht die Hubbewegung 36 über den Kurbelwinkel 34 für diejenigen Einlassventile, die von den Einlassnocken 24 der zweiten Nockenwelle 18 gesteuert werden.

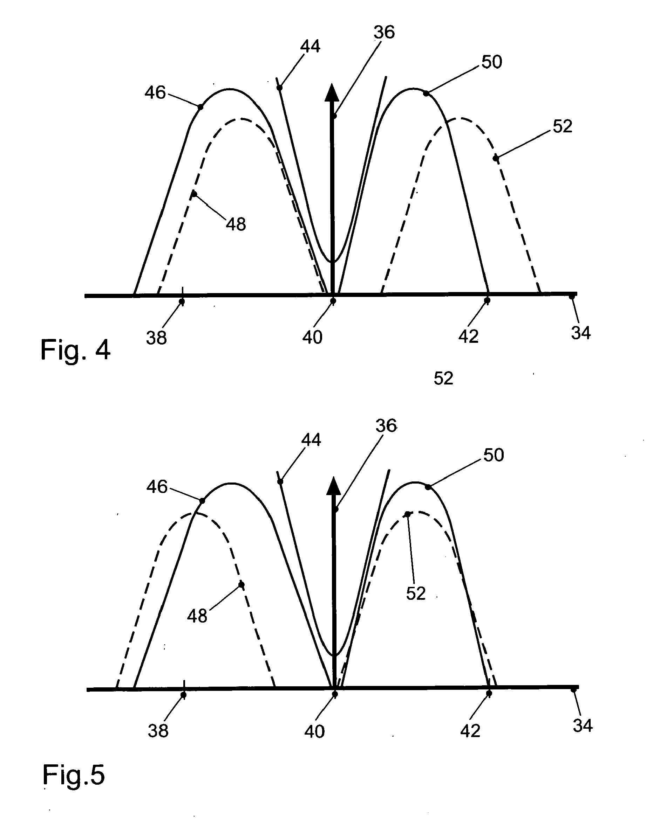

In Fig. 3 ist eine Stellung des Verstellers 28 mit 0°KW dargestellt, d.h. die Nockenwellen 16, 18 sind nicht gegeneinander verdreht. In Fig. 4 ist eine Stellung des Verstellers bei maximaler Verstellung in Richtung Spät und in Fig. 5 ist eine Stellung des Verstellers bei maximaler Verstellung in Richtung Früh dargestellt. Wie aus den Fig. 2 bis 5 unmittelbar ersichtlich, bleibt die Hubbewegung der Ventile der ersten Kurbelwelle 16 (zweiter Graph 46 und vierter Graph 50) relativ zur Kurbelwelle unverändert, wohingegen die Hubbewegung der Ventile der zweiten Kurbelwelle 18 (dritter Graph 48 und fünfter Graph 52 jeweils gestrichelt) gemeinsam für die zugeordneten Einlassventile und Auslassventile verschoben werden. Hierdurch kann einerseits durch die verschobenen Öffnungszeiten zwischen den Einlassventilen der ersten Kurbelwelle 16 (Einlassnocken 20; vierter Graph 50) und den Einlassventilen der zweiten Kurbelwelle 18 (Einlassnocken 24; fünfter Graph 52) ein Miller/Atkinson-Effekt simuliert werden (Fig. 3), wobei andererseits eine Kollision zwischen den Einlassventilen und dem Hubkolben verhindert ist.

Vorraussetzung für dieses simulierte Millern ist das Vorhandensein von mindestens zwei Einlassventilen pro Arbeitszylinder und einem, vorzugsweise zwei Auslassventilen pro Arbeitszylinder, wobei die Einlassventile eines jeden Arbeitszylinders von verschiedenen Kurbelwellen betätigt werden. Hierbei bedient eine Nockenwelle 16 die Hälfte aller Ein- und Auslassventile mit konventionellen Steuerzeiten. Alternativ ist einlassseitig auf maximale Füllung an einem bestimmten Betriebspunkt, beispielsweise für den Betriebspunkt Kaltstart, optimierte. Die zweite Nockenwelle 18 bedient die verbleibenden Ein- und Auslassventile und ist hinsichtlich der Nockenkontur für "Auslassventil schließt" und "Einlassventil öffnet" so ausgelegt, dass ein Verstellbereich dieser Nockenwelle 18 von ca. 60° KW +/-20° ohne Kolbenkollision stattfinden kann.

Der Millereffekt wird dadurch erzielt, dass das früheste "Einlassventil öffnet" der einen Nockenwelle 16 und das späteste "Einlassventil schließt" der anderen Nockenwelle 18 unterschiedlichen Ventilen für jeden Arbeitszylinder zugeordnet ist, vgl. Fig. 4.

Eine Anhebung der Verdichtungsendtemperatur ist dadurch möglich, dass bei "Einlassventil schließt" der festen Nockenwelle 16 (vierter Graph 50) im UT 42 die zweite Nockenwelle 18 (Millerwelle) ebenfalls in Richtung Früh verschoben wird (fünfter Graph 52; vgl. Fig. 5). Gleichzeitig kann so eine Anhebung der Abgastemperatur (wichtig für Abgasnachbehandlung) durch ein Frühschieben des "Auslassventil öffnet" der Millerwelle 18 (dritter Graph 48) erfolgen, wie in Fig. 5 dargestellt. Dies kann ein schnelles Aufheizen eines Abgaskatalysators nach einem Kaltstart unterstützten.

Die erste Nockenwelle 16 hat ein "Einlass schließt" (ES) bei ca. = UT 42, um das maximale Verdichtungsverhältnis bei Frühverstellung der zweiten Nockenwelle 18 zu erzielen. Alternativ zu der in Fig. 3 dargestellten Situation bei 0°-Verstellung des Verstellers 28 kann auch dies als 0° Position für die zweite Nockenwelle 18 betrachtet werden, so dass dann nur noch eine Spätverstellung erfolgt. Wichtig ist aber in jedem Fall, dass der Einlassnocken von der ersten Nockenwelle 16 im Vergleich zu beispielsweise bei Dieselmotoren üblichem ES bei ca. 10°-25°KW nach UT derart gekürzt ist, dass die UT Position ES durch beide Nocken erzielt werden kann.

Durch den Miller / Atkinson Zyklus mittels frühem oder spätem ES des Einlassventils ergeben sich positive Effekte auf die NOₓ-Emission und die Homogenisierbarkeit des Dieselgemisches. Aufgrund wechselnder Randbedingungen im Fahrzeugbetrieb, kann das System jedoch nicht immer NOₓ- und Russoptimal eingestellt werden. Vielmehr ist besonders bei kalten Umgebungstemperaturen und/oder bei einem Motorstart die höchste, durch die geometrische Auslegung des Brennraumes bestimmte Verdichtung einzustellen.

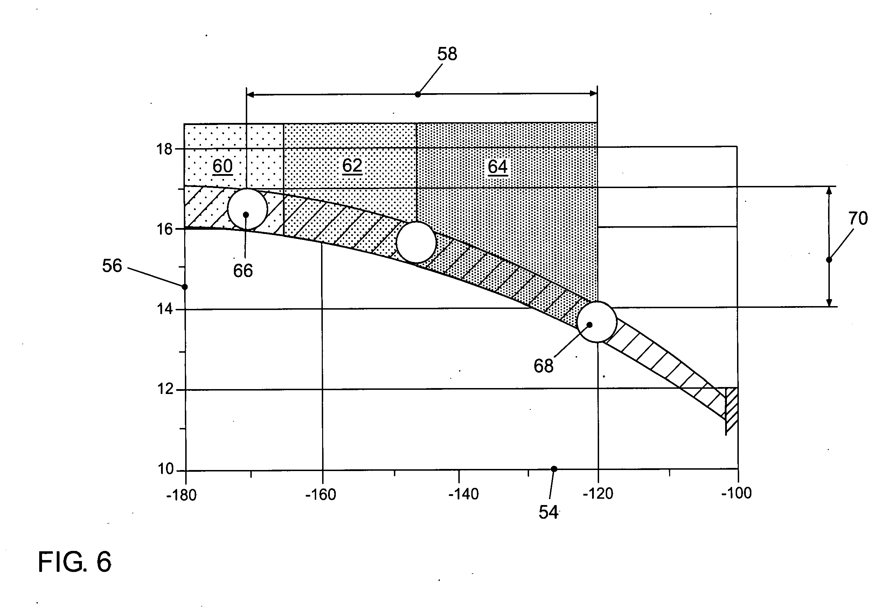

Fig. 6 veranschaulicht die effektive Verdichtung ε in Abhängigkeit von einem späten Schließzeitpunkt des Einlassventils. Auf einer horizontalen Achse 54 ist ein "Spätes Millern Einlassventilschließen (EVS)" in [°KW nach OT] bezogen auf 1 mm Ventilhub aufgetragen und auf einer vertikalen Achse 56 ist eine effektive Verdichtung ε dimensionslos aufgetragen. Ein erster Bereich 60 eines Verstellbereiches 58 nach UT wird bevorzugt für einen Betriebszustand der Brennkraftmaschine "Kaltlauf' angefahren, ein zweiter Bereich 62 des Verstellbereiches 58 nach UT wird bevorzugt für einen Betriebszustand der Brennkraftmaschine "Liefergrad" angefahren und ein dritter Bereich 64 des Verstellbereiches 58 nach UT wird bevorzugt für einen Betriebszustand der Brennkraftmaschine "niedrige NOₓ-Emission" angefahren. Der Verstellbereich 58 nach UT ist begrenzt durch eine maximale effektive Verdichtung εₘₐₓ 66 und eine minimale effektive Verdichtung εₘᵢₙ, 68. Eine Differenz εₘₐₓ₋ₘᵢₙ ist mit 70 bezeichnet.

Erfindungsgemäß ist vorgesehen, die Verdichtungsabsenkung erst bei Erreichen einer bestimmten Motortemperatur (beispielsweise Kühlwasser, Öl, Ansaugluft im Saugrohr) einzuleiten. Alternativ wird eine Anspringtemperatur (Light-Off-Temperatur) eines nachgeschalteten Katalysators detektiert und die Verdichtungsabsenkung erst dann eingeleitet, wenn die Light-Off-Temperatur des Katalysators erreicht bzw. überschritten ist. Hiermit wird verhindert, dass bei geringerer Verdichtung erhöhte CO- und HC-Emissionen durch den inaktiven Katalysator austreten. Weiterhin erfolgt mit einer optionalen Zylinderdrucksensorik im Brennraum die Verstellung bzw. Absenkung des Verdichtungsverhältnisses in Abhängigkeit von einem mittels der Zylinderdrucksensorik detektiertem Zündverzug. Beispielsweise wird die Verdichtungsabsenkung freigegeben, sobald der Zündverzug einen vorbestimmten Wert unterschreitet,.

Im warmen Motorbetrieb werden die oben aufgeführten Regelungen zur Vorausbestimmung eines Wunschverdichtungsverhältnisses bei Wiederstart des Motors beispielsweise in Kombination mit Start-Stop-Systemen verwendet.

## Patentansprüche

1. Verfahren zum Betreiben einer Hubkolben-Brennkraftmaschine, insbesondere Dieselbrennkraftmaschine mit variabler Ventilsteuerung (VVT), insbesondere eines Kraftfahrzeugs, mit wenigstens einem Arbeitszylinder, dem wenigstens ein Einlassventil zugeordnet ist und in dem ein Hubkolben oszillierend zwischen einem oberen Totpunkt (OT) und einem unteren Totpunkt (UT) bewegt wird, wobei der Hubkolben abwechselnd mit einem Ladungswechselhub, der einen Ausstoßtakt sowie einen Ansaugtakt umfasst, und einem Arbeitshub, der einen Verdichtungstakt und einen Arbeitstakt umfasst, eine Kurbelwelle antreibt, wobei in Abhängigkeit von einem Kurbelwinkel der Kurbelwelle im Ladungswechselhub des Hubkolbens das wenigstens eine Einlassventil des wenigstens einen Arbeitszylinders geöffnet und geschlossen wird, wobei ein effektives Verdichtungsverhältnis in wenigstens einem Arbeitszylinder wahlweise **dadurch** unter das geometrische Verdichtungsverhältnis des Arbeitszylinders abgesenkt wird, dass nach einem UT am Ende des Ladungswechselhubes ein Schließzeitpunkt wenigstens eines Einlassventils soweit nach spät verschoben wird und/oder ein Öffnungszeitpunkt des Einlassventils soweit nach früh verschoben wird, dass ein Teil der zuvor im Ansaugtakt angesaugten Frischgasmenge durch dieses Einlassventil im Verdichtungstakt wieder ausgeschoben wird, **dadurch gekennzeichnet, dass** nach einem Kaltstart der Brennkraftmaschine die Verdichtungsabsenkung blockiert wird, bis wenigstens ein Betriebsparameter der Brennkraftmaschine einen vorbestimmten Wert erreicht oder überschreitet.

2. Verfahren nach Anspruch 1, **dadurch gekennzeichnet, dass** der wenigstens eine Betriebsparameter eine Motortemperatur, eine Kühlwassertemperatur, eine Öltemperatur und/oder eine Temperatur einer Ansaugluft in einem Saugrohr der Brennkraftmaschine umfasst.

3. Verfahren nach wenigstens einem der vorhergehenden Ansprüche, **dadurch gekennzeichnet, dass** der wenigstens eine Betriebsparameter eine Temperatur eines Katalysators in einem Abgasstrang der Brennkraftmaschine umfasst, wobei der vorbestimmte Wert für die Temperatur eines Katalysators eine Anspringtemperatur des Katalysators ist.

4. Verfahren nach wenigstens einem der vorhergehenden Ansprüche, **dadurch gekennzeichnet, dass** der wenigstens eine Betriebsparameter ein Zündverzug oder eine Schwerpunktlage der Verbrennung in dem Arbeitszylinder ist.

5. Verfahren nach Anspruch 4, **dadurch gekennzeichnet, dass** der Zündverzug oder die Schwerpunktlage der Verbrennung mittels einer Zylinderdrucksensorik detektiert wird.

6. Verfahren nach wenigstens einem der vorhergehenden Ansprüche, **dadurch gekennzeichnet, dass** bei einem Warmstart der Brennkraftmaschine in Abhängigkeit von wenigstens einem der Betriebsparameter der Brennkraftmaschine ein Wunschverdichtungsverhältnis vorbestimmt und beim Warmstart mittels wenigstens einem Einlassventil eingestellt wird.
